## Europäisches Patentamt
## European Patent Office
## Office européen des brevets

(11) Publication number: **0 274 450**
**A2**

# EUROPEAN PATENT APPLICATION

(21) Application number: **88300148.9**

(22) Date of filing: **08.01.88**

(51) Int. Cl.⁴: **G 01 V 3/10**

(30) Priority: **09.01.87 GB 8700509**
**16.09.87 GB 8721800**

(43) Date of publication of application:
**13.07.88  Bulletin  88/28**

(84) Designated Contracting States: **DE ES FR IT NL**

(71) Applicant: **Kolectric Limited**
**Dean International House Thames Industrial Estate**
**Marlow Buckinghamshire SL7 1TB  (GB)**

(72) Inventor: **Gill, Michael John**
**The Willows Lymore Valley**
**Milford-On-Sea Hampshire S04 0TW  (GB)**

(74) Representative: **Greene-Kelly, James Patrick et al**
**Marks & Clerk 57-60 Lincoln's Inn Fields**
**London WC2A 3LS  (GB)**

(54) A device for measuring the proximity of a metal object.

(57) A device for measuring the proximity of a metal object, and a sensor for such a device are disclosed. The device includes a drive and sense coils 220, 230 which are loosely coupled together. The drive coil is driven by a square-wave drive signal, controlled by a micro-processor 200. The amplitude of the signal sensed by the sense coil 230 in response to the drive signal is dependent upon the proximity of a metal object. Sensing circuitry 250, 290 is provided for measuring the amplitude of this signal to derive a signal indicative of the proximity of the metal object. In particular, a multiplexor 280 is provided for sampling predetermined parts of the signal, (which exhibits a time-dependent change when a metal object is proximate). By ignoring the initial part of each half cycle of the received signal, effects due to conductive but non-metallic proximate objects may be ignored. A particular application of the device is for sensing the depth of reinforcing iron bars in concrete. A novel form of sensor (figure 3) is also disclosed.

FIG.2.

## Description

A Device for Measuring the Proximity of a Metal Object

This invention relates to a device for measuring the proximity of a metal target.

Such devices for example metal detectors, have been proposed in the past and operate in principle by generating an alternating magnetic field from a coil in a search head assembly. A metal "target" reacts to this alternating magnetic field in two main ways. Firstly, rapid changes of magnetic field are initially "repelled" by the target by stimulation of eddy currents in the target surface and as time goes on the change in the field penetrates the target. Secondly, permanent influence of the field occurs if the target has a relative magnetic permeability other than unity.

In either case the generated magnetic field is disturbed from its natural pattern and these disturbances may be detected by the search head assembly. The first effect applies to any metal, and also to any electrically conductive substance e.g carbon, mineralised water etc. The second effect applies only to magnetic substances such as iron, nickel or ferrite.

Such metal detectors also operate in one of two basic ways i.e. "pulse induction" or "continuous wave". The term continuous wave refers to the continuous generation of an alternating field, requiring the sensing of target disturbances to be carried out in the presence of a large self-induced signal. Generally, continuous wave equipment is characterised by low power requirements but as the disadvantage of exhibiting instability at extreme range. In the pulse induction technique a magnetic field is generated as brief, intense pulses at relatively infrequent intervals. After generation a receiver is enabled to detect the faint eddy-current "echos" induced in the target by the pulse. Pulse induction has the disadvantage of having a higher power requirement than equivalent continuous wave devices and is also susceptable to interference.

A particular application of metal detecting devices is for sensing the depth of steel reinforcing bars in concrete. Such a device, for example, is the Kolectric COVERMETER (Trade Mark). This and other like portable devices use a continuous wave principle and are sensitive to both eddy-current and magnetic effects. However, it is a disadvantage of this device that the maximum range of the instrument is low and also the device is seriously affected by conductivity or ferrous content of concrete.

It is an object of the invention to provide a device for measuring the proximity of a metal object which alleviates at least one of these disadvantages.

According to the invention in a first aspect there is provided a continuous wave device for measuring the proximity of a metal object comprising:

a drive coil

drive signal generating means for producing a drive signal whereby the drive coil is driven to produce a continuous alternating magnetic field

a sense coil for sensing said magnetic field, the magnitude of the sensed field being influenced by the proximity of the object and

sensing means for sampling the sensed field signal and deriving a signal indicative of the proximity of said object and wherein the drive signal of said generator includes a plurality of portions in which the level thereof changes from a first level to a second level, said second level remaining substantially undisturbed during sampling of the sensed field signal.

According to the invention in a second aspect there is provided a conductive object proximity sensor comprising a drive coil, a sense coil and wherein said sense coil has a magnetically neutral core and the drive coil has a core having a magnetic permeability greater than that of the sense coil.

According to the invention in a third aspect there is provided a conductive object proximity sensor comprising a drive coil and a sense coil, the drive and sense coils being of elongate form and disposed in parallel and adjacent to one another.

According to the invention in a fourth aspect there is provided a conductive object proximity sensor comprising a drive coil, a sense coil and a compensation coil, the compensation coil being connected to the sense coil and the drive coil being substantially more closely coupled to the compensation coil than to the sense coil and the compensation coil being wound, relative to the sensor coil so that in response to a periodic signal from the drive coil, the sensor coil and compensation coil produce sensed signals in anti-phase.

An embodiment of the invention will now be described, by way of example, with reference to the accompanying drawings in which:

Figure 1 is a perspective view of an embodiment of the invention.

Figure 2 is a block diagram of the circuit arrangement of the embodiment of figure 1.

Figures 3a and 3b are sectional views of the sensor of figure 1, taken in the planes 3a and 3b, respectively, of figure 1.

Figures 4a-4g are timing diagrams for explaining the operation of the embodiment of figures 1 to 3 in which Figures 4a-4f are voltage signals and Figure 4g is a current signal and in which:

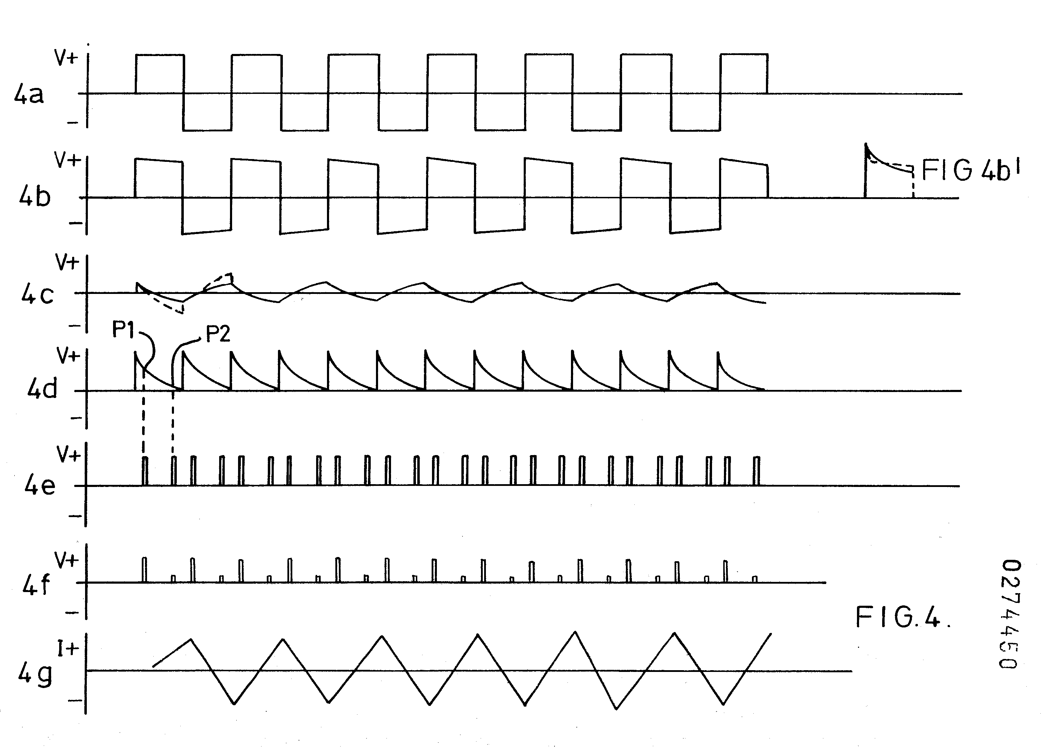

Figure 4a shows the form of drive voltage signal applied to the drive coil

Figure 4b shows the form of the sensed voltage signal, for no target and without the effects of the compensation coil

Figure 4b' shows one half cycle of the sensed waveform, without the effects of the compensation coil, showing the sensed signal for conductive but non-metallic, and metallic, targets

Figure 4c shows the sensed voltage signal for a metallic target, including the effects of the compensation coil

Figure 4d shows the output of the synchronous detector

Figure 4e illustrates the sampling points

Figure 4f shows the input to the analog to digital converter

Figure 4g shows the current waveform in the drive coil corresponding to the voltage waveform of figure 4a.

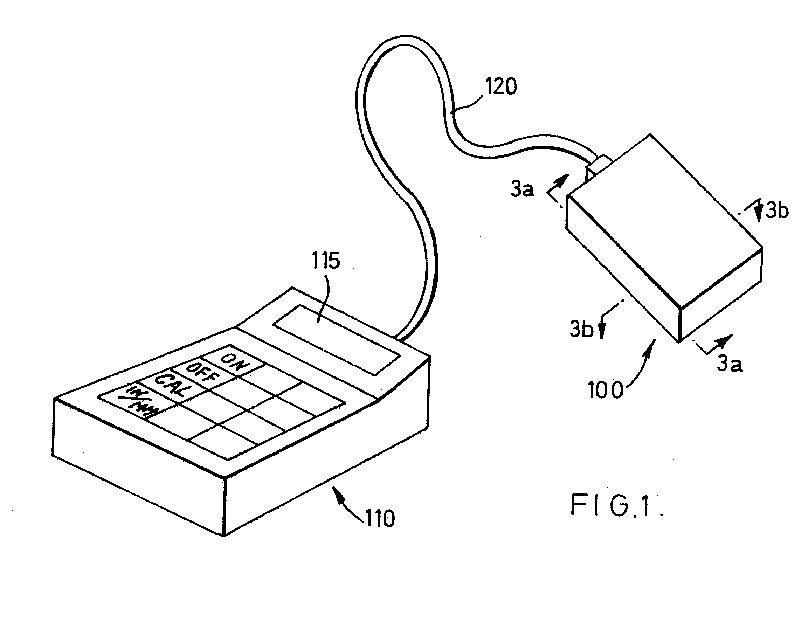

With reference to figure 1 a embodiment of the device of the invention is shown. The device is comprised of two main components namely a sensor 100 and a processing control and display unit 110 joined to the sensor 100 by a connection lead 120. The unit 110 is of portable size and may be carried, for example, in a pouch attached to a waist belt.

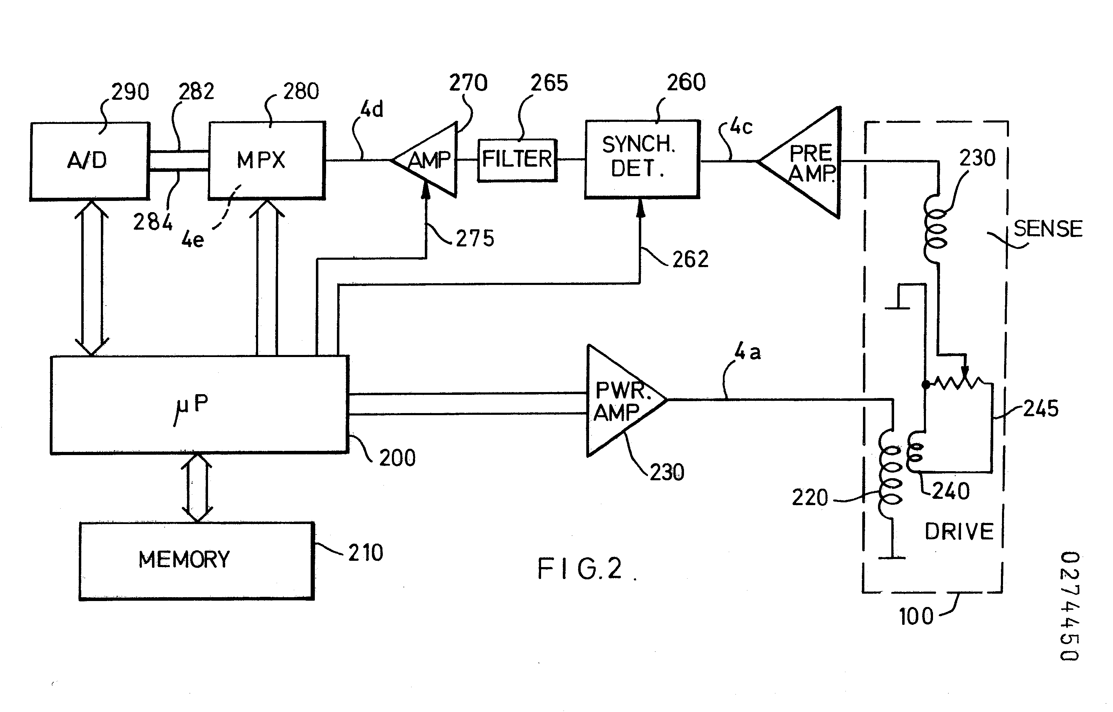

The device operates using a continuous wave principle and the circuit details will be described with reference to figure 2.

The processing and control of the device is performed by a micro-processor 200, preferably an HD 6303X which is connected, through a bus connection, to a memory 210 in which the operational programs for the micro-processor 200 are stored. The processor is further connected to a drive coil 220 disposed within the sensor 100 via a power amplifier 230 which drives the coil 220, the processor providing a periodic drive control signal to the power amplifier 230.

The sensor further includes a sense coil 230 for sensing the magnetic field generated by the drive coil 220 and a cancellation coil 240 disposed in parallel with the sense coil 230, the purpose of which is described below. The sense coil 230 is connected to a sensing circuit in the unit 110, the sensing circuit includes a pre-amplifier 250 to which is connected a synchronous detector 260 the purpose of which is to invert alternate half cycles of the sensed periodic signal. The output from the detector 260 is fed via a high pass filter 265 and an amplifier 270 to a multiplexer 280, which is controlled by the micro-processor to sample predetermined parts of the sensed signal and supply these to a dual-slope A-D converter 290 which converts the amplitude of the samples to a digital value, which is interpreted by the micro-processor 200 for display.

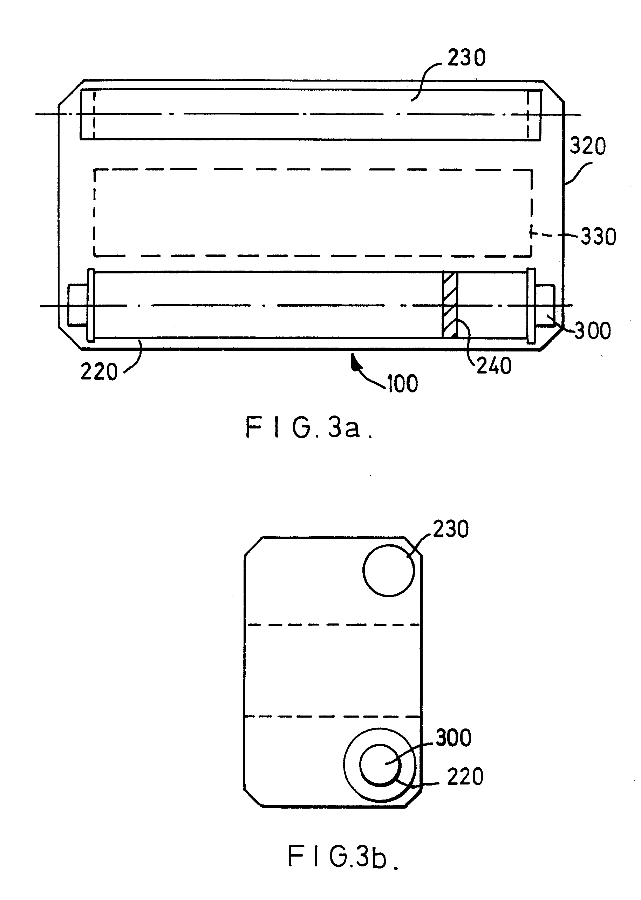

The construction of the sensor 100 is shown in figures 3a and 3b. The drive coil 220 is of elongate form e.g 110 mm by 17 mm diameter and is provided with a ferrite core 300 to improve efficiency (other core materials may be used provided they do not support eddy currents). The compensation coil 240 is wound upon the drive coil 220. The sense coil 230 is also of elongate form and is disposed in parallel with the drive coil. The sense coil is loosely coupled to the drive coil 220 and is air-cored. The inventor has found that the provision of the air-cored sense coil 230 to be substantially preferable to the provision of a sense coil with a ferrite or metal core. The provision of a ferrite or metal core for the sense coil 230, in a manner similar to that used in the prior art, does increase the sensitivity of the sense coil 230 to the drive coil signal. However, the inventor has found that the sense coil also becomes responsive to variations in DC magnetic field, for example the earth's magnetic field, which degrades the performance of the sensor as a whole and found, unexpectedly, that use of a lower sensitivity air-core sense coil provided a substantially more accurate sensing arrangement, with the loss of signal being compensated for by the addition of the pre-amplifier 250 shown in figure 2.

The inventor has also found the elongate form of the drive coil 220 to be advantageous, as this form forces the poles of the coil 220 apart and this produces a more expansive field for a given power, thus giving greater field penetration for the allowable coil size (which is limited, in the described embodiment by the requirement for the sensor to be hand-held with ease).

The sensing and drive coil arrangements are mounted in a housing 320 formed, for example, from plastics material which preferably further includes a hollow central section 330 for reducing the weight and cost of the sensor 100 and further providing a space for stowage of the connecting cable 120.

The operation of the device will now be described with reference to figure 4 which is a timing diagram showing drive and sense signals at various parts of the circuit diagram of figure 2.

The micro-processor outputs control signals 200 to the power amplifier 230 to generate a square-wave voltage drive signal, preferably of substantially 400 Hz to the drive coil 220 as shown in figure 4a. Conventional continuous wave metal detectors use a drive waveform at a single sinusoidal frequency. However, use of such a drive signal does not allow discrimination between the effects of the proximity of the desired metal target and undesirable effects derived from other conductive materials, for example conductive concrete. The inventor has found, however, that if a multiple-frequency voltage signal is applied to the drive coil, e.g a square-wave drive signal, the effects of the metal object and the conductive non-metallic material may be separated. More particularly, using a square wave drive signal, the proximity of a metal target causes a relatively slow time-dependent reduction in mutual inductance between the coils whereas such an effect does not occur for non-metallic, conductive targets which cause a rapid time-dependent reduction in mutual inductance. This effect is illustrated in figure 4b which shows, in phantom lines, the form of the sensed voltage signal with the presence of a conductive non-metallic object, and in full lines, the form of the sensed signal with the presence of a metallic object.

As can be seen, the disturbance settles far more quickly for the conductive, non-metallic object (the slight residual slope in the non-metallic signal being the same as that of the sensed signal with no target, as shown in full lines in figure 4b). Thus, by ignoring an initial part of each half cycle of this signal (which is substantially similar for both a conductive but non-metallic and metallic target) and sampling the signal at the subsequent point (while the drive signal is at a substantially constant level) an unambiguous identification of a metallic target may be performed. with the magnitude of this part of the signal being indicative of the proximity of the metal target.

It should be noted that the current through the drive coil is alternating (and continuous), as shown in fig 4g, thus leading to a low power requirement for the device. As shown in fig 4b, the amplitude of the sensed voltage signal without the presence of a target (i.e. in full lines), is not the same as that of the drive signal 4a, as the sensed signal exhibits a slight downwards slope. This is caused by resistance within the drive coil 220, which modifies the shape of the sensed signal. It is desirable to eliminate this slope effect, as it is present both with and without an conductive object being present and reduces the amount of amplification that may be applied to the sensed signal. In order to remove this slope effect, a compensation coil 240 is provided in series with the sense coil 230. The effect of the compensation coil 240 is adjustable by means of a variable potentiometer 245 and the coil 240 is closely coupled to the drive coil 220 so that the mutual inductance between the coils 220, 240 is substantially unaffected by the presence or absence of a metallic object. The coil is wound so that it produces a voltage signal in anti-phase to the drive signal (and the signal sensed by sense coil 230) and, because of the close coupling between the drive coil 220 and the compensation coil 240 it produces a signal of substantially the same slope as that shown in full lines in figure 4b but in anti-phase.

Therefore, the combined signal of the compensation coil 240 and sense coil 230 only includes that the portion of the signal which has been influenced by the proximity of a conductive object and does not include the signal variation due to the slope effect. Such a signal, after pre-amplification by pre-amplifier 250, is shown in figure 4c, in comparison with the signal including the slope effect which is shown in phantom lines on the first cycle of figure 4c. The removal of the slope effect by this technique allows the capacity of the amplifiers in the receiving circuitry to be better utilized, it is important to note that although in figure 4c the compensation coil 240 has been adjusted to remove both the square-wave signal and the slope effect, these may not coincide. In this circumstance, the coil 240 is adjusted so that the slope of the coil signal matches that of the drive signal. The presence of a small remaining square-wave component is not important as this will be removed by the synchronous detector 260.

The sensed signal as shown in figure 4c is input to the synchronous detector 260, which is supplied with a control signal from processor 200 on line 262 at the same frequency and in-phase with the drive control signal to amplifier 230. The synchronous detector 260 inverts alternate half cycles of its input signal, allowing the signal to be examined in detail while eliminating the absolute amplitude of the signal. The resulting signal is then amplified by the amplifier 270 to form the signal shown in figure 4d.

This signal is then fed to a multiplexer 280 which, under control of instruction signals from the microprocessor 200 (figure 4e), samples the signal at two points P1 and P2 as shown in figures 4d and 4e. The multiplexer then outputs the sampled signal level of points P1, P2 to the analog to digital converter on lines 282, 284 (figure 4f). The average value of the difference between a series of P1 sampled signals and a series of P2 sampled signals is then converted by A/D converter 290, to an equivalent digital value. The points P1 and P2 are chosen so that point P1 lies after the initial perturbation due to the presence of a conductive object (e.g 50μS after), so that conductive but non-metallic effects are ignored and point P2 is chosen as a reference level near the end of each decoded half cycle. The difference in magnitude between the signal at these points is indicative to the distance of a known metallic object (e.g a steel reinforcing bar of known diameter embedded in concrete) from the sensor 100. The actual distance value may be derived from an appropriate look-up table (stored in the memory 210) by the micro-processor 200 and the result displayed on an associated display 155 (figure 1).

In order to give greater range capability, the amplifier 270 is preferably provided with a variable gain which is controllable by the processor 200 through line 275, the processor 200 increasing the gain when the magnitude of the received digital values from point P1 decreases below a predetermined value.

The metal detecting device as described has particular application for detecting the depth of iron reinforcing bars in concrete and tests by the applicants have shown that such a device may detect the depth of such reinforcing bars accurately up to 200 mm with an accuracy of $+$ 1 mm over this range. Also, as the device, with the exception of the drive and sense coils, is primary solid state the power requirement of the device is very low. With coils of the dimensions indicated and for the range mentioned above, a power requirement of the order of 100 mw is required, a figure quite compatable with battery portable operation.

Also, while the embodiment described samples the sensed signal in two places per half cycle to provide a value indicative of the proximity of a metallic object, it is recognised that the time dependent effect, in response to the field disturbance, can provide further information. For example, if measurements are taken at two distances from the object, the relative magnitudes of the two sensed signals may give an indication of the dimensions of the object. Furthermore, the time dependent effect is different for different metals so that sampling at more than two points, to derive the curve of the time dependent portion can provide an indication of the type of metal from which the metallic object is formed.

Furthermore, although the drive voltage used is a square wave, this is not to be construed as limitative and any continuous waveform which provides a plurality of portions including a sharp change in signal level followed by a period of inactivity during which sampling of the sensed signal may be performed, may be used.

## Claims

1. A continuous wave device for measuring the proximity of a metal object comprising:
     a drive coil (220)
     drive signal generating means (200,230) for producing a drive signal whereby the drive (220) coil is driven to produce a continuous, alternating magnetic field

a sense coil (230) for sensing said magnetic field, the magnitude of the sensed field being influenced by the proximity of the object characterized by

sensing means (250-290) for sampling the sensed field signal and deriving a signal indicative of the proximity of said object and wherein the drive signal of said generating means (200,230) includes a plurality of portions in which the level thereof changes from a first level to a second level, said second level remaining substantially undisturbed during sampling of the sensed field signal.

2. A device as claimed in claim 1 wherein said drive signal comprises a symmetrical or asymmetrical square-wave voltage.

3. A device as claimed in claim 1 or claim 2 wherein the frequency of said drive signal is substantially 400 Hz.

4. A device as claimed in claim 1 wherein said sensing means (250-290) further comprises means (280) for sampling the sensed field signal at a first point corresponding to a point of said drive signal spaced from an alteration of signal level of said drive signal.

5. A device as claimed in claim 4 wherein said sampling means (280) further samples said sensed signal at a second point after said first point in each half cycle, the difference in magnitude between said first and second points being indicative of the proximity of the object.

6. A device as claimed in claim 4 or claim 5 wherein said sensing means (250-290) further comprises an analog to digital converter (290) for converting the output of said sampling means to a digital signal.

7. A device as claimed in claim 6 wherein said analog to digital converter (290) is a dual slope converter (290)

8. A device as claimed in any one of claims 1 to 7 further comprising a compensation coil (240) connected to said sense coil (230), the compensation coil (240) being closely coupled to said drive coil (230) and being arranged to produce a sensed signal in anti-phase with the signal sensed by the sense coil (230).

9. A device as claimed in claim 8 wherein the effect of the compensation coil (240) is adjustable.

10. A device as claimed in claim 9 wherein said adjustment is effected by a potentiometer means (245) connected to said compensation coil (240).

11. A device as claimed in any one of the preceding claims wherein said sensing means includes a synchronous detector (260) responsive to the drive signal generating means (200,230) for inverting alternate half cycles of the sensed field signal.

FIG.1.

115

120

3a

3b

3b

3a

100

110

0274450

FIG.2.

FIG. 3a.

FIG.3b.

FIG.4.

V+ / 4a

V+ / 4b — FIG 4b¹

V+ / 4c

P1  P2

V+ / 4d

V+ / 4e

V+ / 4f

I+ / 4g

0274450